# FASCICULE DE BREVET EUROPEEN

(11) **EP 0 863 328 B1**
(45) Date de publication et mention de la délivrance du brevet: **02.05.2002**
(21) Numéro de dépôt: 98103260.0
(22) Date de dépôt: 25.02.1998
(51) Int. Cl.: F16D 69/02

(54) **Garniture de frottement à porosité contrôlée destinée à équiper un dispositif mettant en oeuvre un frottement en milieu liquide**
Reibbelag mit kontrollierter Porosität für ein Nassreibungssystem
Friction lining with controlled porosity for a wet friction system

(30) Priorité: 06.03.1997 FR 9702780
(43) Date de publication de la demande: 09.09.1998
(73) Titulaire: VALEO, 75017 Paris (FR)
(72) Inventeur: Rommeru, Cécile, 94017 Créteil (FR); Adamczak, Loîc, 61800 Montsecret (FR); Menard, Denis, 87000 Limoges (FR); Pantier, Philippe, 87020 Ambazac (FR)
(74) Mandataire: Lemaire, Marc

(56) Documents cités:
- EP-A- 0 202 145
- DE-A- 4 018 671
- US-A- 4 926 978

## Description

La présente invention concerne une garniture de frottement de forme générale annulaire plate destinée à équiper un dispositif mettant en oeuvre un frottement en milieu liquide d'après le préambule de la revendication 1.

L'invention concerne plus particulièrement une garniture de frottement se présentant sous la forme d'un anneau plat ou d'un tronc de cône et le dispositif qui en est équipé est un disque d'embrayage ou de frein, notamment de boîte de vitesses automatique ou y associé, fonctionnant dans l'huile, ou un anneau ou cône de synchronisation de boîte de vitesses à commande manuelle fonctionnant également dans l'huile, un tel dispositif étant installé à bord d'un véhicule automobile.

L'invention concerne plus particulièrement une garniture de frottement du type réalisé à partir d'un matériau de frottement constitué par un mat de fibres imprégné d'une résine thermodurcissable et dont le procédé de fabrication comporte une étape finale de cuisson, associée à une opération de moulage ou de surmoulage, au cours de laquelle on exerce une mise sous pression de l'ébauche annulaire de la garniture préalablement réalisée à partir du mat de fibres imprégné.

La composition et la structure d'un matériau de frottement constitué par un mat de fibres imprégné d'une résine de type thermodurcissable sont décrites en détail dans le document WO-A-95/26.473. Ce document défini le préambule de la revendication 1.

Ce document mentionne notamment les avantages structurels et de mise en oeuvre d'un tel type de matériau par rapport aux matériaux de l'état de la technique, et notamment par rapport au matériau de type "papier", qui sont constitués essentiellement de fibres de cellulose qui sont obtenues par voie humide selon un procédé usuel de fabrication de papier, c'est-à-dire en procédant à une dispersion de fibres courtes, notamment des fibres cellulosiques, dans une solution aqueuse contenant des charges.

On pourra aussi se reporter au contenu détaillé de ce document dans le cadre de la mise en oeuvre d'un tel matériau pour la réalisation d'une garniture de frottement conforme aux enseignements de l'invention.

Ce type de matériau non tissé, faisant appel à un procédé à sec, comparé au procédé humide mis en oeuvre pour l'obtention d'un matériau de type papier, a pour avantage structurel d'être poreux et de comporter des porosités de taille importante comprises entre 50 et 500 micromètres et qui sont communicantes entre elles, tandis que les papiers ont des porosités de petite taille comprises entré 5 et 50 micromètres et qui ne sont pas communicantes.

La notion de porosité communicante est une notion relative, c'est-à-dire qu'elle doit être appréciée par rapport au liquide dans lequel est immergée la garniture de frottement, c'est-à-dire plus particulièrement l'huile d'une transmission.

En effet, l'huile ne traverse pas un matériau de type papier tandis qu'elle traverse le matériau de frottement poreux réalisé conformément aux enseignements du document WO-A-95/26.473.

La porosité de ce type de matériau permet ainsi la circulation de l'huile à l'intérieur même de la garniture de frottement, et notamment depuis son diamètre intérieur vers son diamètre extérieur et réciproquement, ce qui permet d'évacuer de manière très efficace la chaleur produite lors du frottement de la garniture et d'éviter ainsi des élévations de température qui pourraient dégrader le matériau de frottement, l'huile ou le système en général auquel est incorporé l'embrayage équipé d'une telle garniture.

Une telle caractéristique avantageuse est particulièrement intéressante dans les systèmes à glissement contrôlé ou continu.

Par contre, cette circulation interne d'huile dans la garniture peut être néfaste dans des systèmes tels que des dispositifs appelés LOCK-UP dans lesquels la garniture de frottement doit aussi jouer un rôle de joint d'étanchéité afin d'éviter l'apparition de contre-pressions dans la chambre de LOCK-UP aboutissant à une chute de la capacité de transmission en couple.

L'invention a pour objet dé proposer un perfectionnement à une garniture de frottement faisant appel à un matériau du type mentionné précédemment afin de pouvoir utiliser ce type de matériau dans différents types de systèmes en maîtrisant parfaitement l'écoulement du liquide.

Dans ce but, l'invention propose une garniture de frottement du type sus indiqué dans lequel le procédé, de fabrication de la garniture de frottement comporte une étape de moulage, ou de surmoulage, et de cuisson dans un moule sous pression, caractérisée en ce que la garniture comporte des zones de porosités différentes et contrôlées.

Conformément aux enseignements de l'invention, le fait de pouvoir contrôler la porosité du matériau de frottement en tous points de la garniture, ou dans des zones déterminées de cette dernière, permet de contrôler le débit d'huile à l'intérieur de la garniture, voire le supprimer, tout en conservant les propriétés tribologiques de la garniture de frottement.

Selon d'autres caractéristiques de l'invention :
- la garniture comporte au moins une zone annulaire de porosité contrôlée inférieure à la porosité moyenne du corps en matériau de frottement constituant la garniture ;
- la zone annulaire à porosité contrôlée est constituée par un chanfrein périphérique agencé à l'un des bords périphériques, intérieur ou extérieur, de la garniture ;
- la garniture comporte un insert annulaire concentrique, notamment à structure imperméable, dont l'épaisseur est inférieure à l'épaisseur moyenne de la garniture annulaire plate, et la zone annulaire en vis-à-vis du matériau constitutif du corps de la garniture de frottement présente une porosité contrôlée inférieure à la porosité moyenne dudit matériau de frottement
- l'insert annulaire appartient à un support, par exemple à un support métallique appartenant à un disque d'embrayage ou de frein sur lequel la garniture est surmoulée ;
- la taille des cellules communicantes est comprise entre 50 et 500 micromètres ;
- la porosité du matériau de frottement est comprise entre 20 et 60%.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique illustrant un exemple de réalisation d'une garniture de frottement conforme aux enseignements de l'invention qui est illustrée en section par plan diamétral ;
- la figure 2 est une vue schématique de face illustrant un autre exemple de réalisation d'une garniture de frottement conforme aux enseignements de l'invention ; et
- la figure 3 est une demi-vue en section par un plan diamétral selon la ligne 3-3 de la figure 2.

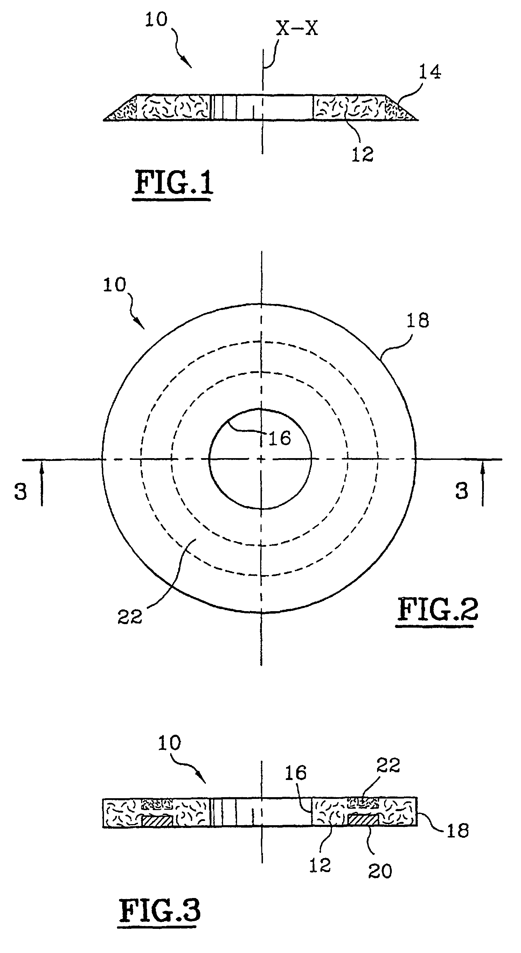

On a représenté sur la figure 1 une garniture de frottement 10 qui se présente sous la forme générale d'un anneau plat d'axe X-X.

Selon la conception connue mentionnée précédemment, le corps de forme générale annulaire 12 de la garniture 10 est réalisé dans un matériau de frottement constitué par un mat de fibres imprégné de résine thermodurcissable.

Le procédé de fabrication d'une telle garniture comporte une étape finale de cuisson et de moulage, de la garniture de frottement elle-même 10, ou de surmoulage, avec cuisson, de la garniture de frottement sur un support (non représenté sur la figure) pour constituer directement un disque de frottement tel que par exemple un disque d'embrayage ou un disque de frein.

Dans la conception selon l'état de la technique, la garniture de frottement 10 est de constitution homogène, c'est-à-dire que sa porosité moyenne est sensiblement constante quelle que soit la zone de la garniture.

Conformément aux enseignements de l'invention, il est prévu que la porosité de la garniture soit contrôlée précisément et qu'elle puisse notamment comporter au moins une zone annulaire dont la porosité est inférieure à la porosité moyenne du matériau constitutif du corps 12, et dont la densité est supérieure à la densité moyenne du corps.

Dans l'exemple illustré à la figure 1, la garniture 10 comporte une zone périphérique extérieure à très haute densité et à porosité réduite, pratiquement nulle, qui est réalisée sous la forme d'un chanfrein périphérique 14.

Le chanfrein est réalisé lors de l'opération de moulage ou de surmoulage final sous pression avec cuisson, c'est-à-dire que l'ébauche de la garniture annulaire est placée dans un moule de forme complémentaire, l'opération de moulage par pression axiale et de cuisson aboutissant à un accroissement de la densité et donc à une réduction importante et localisée de la porosité dans la zone annulaire chanfreinée périphérique 14.

Cette garniture peut notamment être utilisée dans le cas d'un système à LOCK-UP dans lequel la garniture fait fonction de joint d'étanchéité.

Il est bien entendu possible de prévoir différentes zones annulaires concentriques de porosités distinctes dans une même garniture annulaire.

A cet effet, chaque zone annulaire peut être réalisée selon l'exemple illustré aux figures 2 et 3.

Dans cet exemple, la garniture annulaire 10 est de forme annulaire plate et délimitée par deux surfaces cylindriques intérieure 16 et extérieure 18.

La garniture 10 comporte un insert annulaire en forme générale d'anneau plat 20 qui est introduit dans le corps 12 de l'ébauche lors du moulage ou du surmoulage.

La structure du matériau de l'insert 20 est tel qu'il est par exemple imperméable à l'huile et sa présence lors de l'opération de surmoulage et de cuisson provoque la formation d'une zone en vis-à-vis 22 formée dans le corps 12 de la garniture dont la densité est accrue par l'effet de pression axiale du moule et dont la porosité est donc nettement inférieure à celle du matériau de base 12, voire nulle si l'on désire assurer une étanchéité par l'intermédiaire de la garniture.

Aux figures 2 et 3, l'insert 20 est réalisé sous la forme d'un élément indépendant.

Il peut bien entendu être avantageusement remplacé par une nervure annulaire en relief formée sur une face d'un support métallique en forme de disque sur lequel on vient surmouler la garniture 20 pour réaliser directement un disque d'embrayage de friction.

D'une manière avantageuse, les garnitures en matériau de frottement poreux et à porosité contrôlée permettent d'obtenir une variation de la porosité du matériau en fonction de l'effort de pression axiale qui lui y est appliquée en fonctionnement, c'est-à-dire que sa porosité varie de manière inversement proportionnelle à la valeur de l'effort de pression appliqué à la garniture.

Une telle caractéristique est impossible dans le cas des matériaux du type papier car l'huile ne circule pas à l'intérieur du matériau.

## Revendications

1. Garniture de frottement (10) de forme générale annulaire plate, se présentant sous la forme d'un anneau plat ou d'un tronc de cône et destinée à équiper un dispositif mettant en oeuvre un frottement en milieu liquide tel que, plus particulièrement, un disque d'embrayage ou de frein, notamment de boîte de vitesses automatique fonctionnant dans l'huile ou y associé ou un anneau ou cône de synchronisation de boîte de vitesses à commande manuelle fonctionnant dans l'huile, du type réalisée à partir d'un matériau de frottement constitué par un mat de fibres imprégné d'une résine thermodurcissable qui, après une étape finale de cuisson, présente une structure poreuse à cellules communicantes, et du type dans lequel le procédé de fabrication de la garniture de frottement comporte une étape de moulage ou de surmoulage et de cuisson dans un moule sous pression, **caractérisée en ce que** la garniture (12, 22) comporte des zones de porosités différentes et contrôlées.

2. Garniture selon la revendication 1, **caractérisée en ce qu'**elle comporte au moins une zone annulaire de porosité contrôlée (14, 22) inférieure à la porosité moyenne du corps (12) en matériau de frottement constituant la garniture.

3. Garniture selon la revendication 2, **caractérisée en ce que** ladite zone annulaire à porosité contrôlée est constituée par un chanfrein périphérique (14) agencé à l'un des bords périphériques, intérieur ou extérieur, de la garniture (10).

4. Garniture de frottement selon la revendication 2 ou 3 **caractérisée en ce qu'**elle comporte un insert annulaire concentrique (20), notamment à structure imperméable, dont l'épaisseur est inférieure à l'épaisseur moyenne de la garniture annulaire plate (10), et **en ce que** la zone annulaire en vis-à-vis (22) du matériau constitutif du corps de la garniture de frottement présente une porosité contrôlée inférieure à la porosité moyenne dudit matériau de frottement.

5. Garniture selon la revendication précédente, **caractérisée en ce que** l'insert annulaire appartient à un support, par exemple à un support métallique appartenant à un disque d'embrayage ou de frein sur lequel la garniture est surmoulée.

6. Garniture de frottement selon l'une quelconque des revendications précédentes, **caractérisée en ce que** la taille des cellules communicantes est comprise entre 50 et 500 micromètres.

7. Garniture de frottement selon l'une quelconque des revendications précédentes, **caractérisée en ce que** la porosité du matériau de frottement est comprise entre 20 et 60%.

## Claims

1. A friction liner (10) of generally flat, annular form, which is in the form of a flat or frusto-conical ring adapted for equipping an apparatus for effecting friction in a liquid medium such as, more particularly, a clutch or brake disc, especially for an automatic gearbox working in oil or associated therewith, or a synchronising ring or cone for a manual gearbox working in oil, of the type made of a friction material consisting of a mat of fibres impregnated with a thermosetting resin, which, after a final curing step, has a porous structure with communicating pores, and of the type in which the method of making the friction liner comprises a step of moulding it or forming it by *in situ* moulding, and curing it, in a mould under pressure, **characterised in that** the liner (12, 22) comprises zones having different, and controlled, porosities.

2. A liner according to Claim 1, **characterised in that** it includes at least one annular zone (14, 22) having a controlled porosity which is lower than the mean porosity of the body of friction material (12) that constitutes the liner.

3. A liner according to Claim 2, **characterised in that** the said annular zone of controlled porosity comprises a peripheral chamfer (14) formed at one of the edges, internal or external, of the liner (10).

4. A friction liner according to Claim 2 or Claim 3, **characterised in that** it includes a concentric annular insert (20), in particular one with an impermeable structure, having a thickness smaller than the mean thickness of the flat annular liner (10), and **in that** the facing annular zone (22) of the material of the body of the friction liner has a controlled porosity lower than the mean porosity of the said friction material.

5. A liner according to the preceding Claim, **characterised in that** the annular insert is part of a support member, for example a metallic support member which is part of a clutch or brake disc on which the liner is formed by superimposed moulding.

6. A friction liner according to any one of the preceding Claims, **characterised in that** the size of the communicating pores is in the range between 50 and 500 micrometres.

7. A friction liner according to any one of the preceding Claims, **characterised in that** the porosity of the friction material is in the range between 20 and 60%.

## Patentansprüche

1. Reibbelag (10) mit flacher ringförmiger Gesamtform in Form eines flachen Rings oder eines Kegelstumpfes für eine Naßreibungsvorrichtung, wie insbesondere eine Kupplungs- oder Bremsscheibe, vor allem eines in Öl laufenden automatischen Getriebes oder damit verbunden, oder ein Synchronring oder Synchronkegel eines in Öl laufenden Handschaltgetriebes, ausgeführt aus einer mit einem Duroplast imprägnierten Fasermasse, die nach einem abschließenden Brennvorgang eine poröse Struktur mit zusammenhängenden Zellen aufweist, wobei das Verfahren zur Herstellung des Reibbelags einen Vorgang zum Formen oder Aufformen und Brennen in einer Druckform umfaßt,
**dadurch gekennzeichnet,**
**daß** der Reibbelag (12, 22) Bereiche mit unterschiedlichen und kontrollierten Porositäten umfaßt.

2. Reibbelag nach Anspruch 1, **dadurch gekennzeichnet, daß** er wenigstens einen ringförmigen Bereich mit kontrollierter Porosität (14, 22) umfaßt, die kleiner als die mittlere Porosität des Körpers (12) aus Reibwerkstoff ist, aus dem der Reibbelag besteht.

3. Reibbelag nach Anspruch 2, **dadurch gekennzeichnet, daß** der ringförmige Bereich mit kontrollierter Porosität aus einer Umfangsabschrägung (14) besteht, die an einem der, inneren oder äußeren, Umfangsränder des Reibbelags (10) angeordnet ist.

4. Reibbelag nach Anspruch 2 oder 3, **dadurch gekennzeichnet, daß** er einen konzentrischen ringförmigen Einsatz (20), insbesondere mit undurchlässiger Struktur, umfaßt, dessen Dicke kleiner als die mittlere Dicke des flachen ringförmigen Reibbelags (10) ist, und daß der gegenüberliegende ringförmige Bereich (22) des Werkstoffs, aus dem der Körper des Reibbelags besteht, eine kontrollierte Porosität aufweist, die kleiner als die mittlere Porosität des besagten Reibwerkstoffs ist.

5. Reibbelag nach dem vorangehenden Anspruch, **dadurch gekennzeichnet, daß** der ringförmige Einsatz zu einem Träger gehört, beispielsweise zu einem Metallträger, der zu einer Kupplungs- oder Bremsscheibe gehört, auf welcher der Belag aufgeformt ist.

6. Reibbelag nach einem der vorangehenden Ansprüche, **dadurch gekennzeichnet, daß** die Größe der zusammenhängenden Zellen zwischen 50 und 500 Mikrometer liegt.

7. Reibbelag nach einem der vorangehenden Ansprüche, **dadurch gekennzeichnet, daß** die Porosität des Reibwerkstoffs zwischen 20 und 60% liegt.
